# EUROPEAN PATENT SPECIFICATION

(11) **EP 0 404 028 B1**
(45) Date of publication and mention of the grant of the patent: **31.08.1994**
(21) Application number: 90111482.7
(22) Date of filing: 18.06.1990
(51) Int. Cl.: B60P 3/00, A01K 5/00

(54) **Improved truck for mixing fibrous products**
Lastwagen für die Mischung faseriger Produkte
Remorque pour le mélange des produits fibreux

(30) Priority: 21.06.1989 IT 3067589 U
(43) Date of publication of application: 27.12.1990
(73) Proprietor: Faccia, Tiziano, I-35026 Conselve (Padova) (IT)
(72) Inventor: Faccia, Tiziano, I-35026 Conselve (Padova) (IT)
(74) Representative: Modiano, Guido, Dr.-Ing.

(56) References cited:
- EP-A- 0 003 813
- WO-A-88/09614
- FR-A- 2 170 813
- GB-A- 777 945
- US-A- 3 828 535
- US-A- 4 092 014

## Description

The present invention relates to an improved truck for mixing fibrous products.

Mixing trucks are currently commercially available which are substantially constituted by a wheeled chassis above which a container in the shape of an inverted truncated cone is fixed; one or more vertical screws or scrolls are arranged inside said container, and each is welded to a rotating shaft which is coupled to said container and is rotated by adapted actuation elements.

The products to be mixed, such as for example coarse or fibrous forage, are loaded from above, since the container is completely open at the top, whereas the processed product is unloaded through a lower outlet defined on the lateral wall.

Though they optimally perform their functions, said known mixing trucks are however not free from disadvantages, including the possibility that the loaded material may overflow during operation.

It is also known that hay and/or straw beds have to be provided in livestock farms.

Said beds are currently made manually by the assigned personnel.

A mixing device according to the features of the preamble of independent claim 1 is known from EP-A-0 003 813.

The aim of the present invention is to provide an improved truck for mixing fibrous products for which the possibility of overflows of loaded material from the upper edge is prevented.

An important object is to provide an improved truck which has means suitable for the automatic production of beds for livestock using straw and/or hay which have been shredded and mixed inside the container.

Another object is to provide an improved truck the improvement elements whereof can also be applied to known mixing trucks.

Not least object is to provide an improved truck which can be produced at low cost with conventional production systems.

This aim, these objects and others which will become apparent hereinafter are achieved by an improved truck for mixing fibrous products, comprising a chassis on which a mixing container is mounted, said container substantially having the shape of an inverted truncated cone and being internally provided with at least one vertical scroll which is welded to a rotating shaft which is coupled thereto, characterized in that it comprises means adapted to blow shredded hay or straw to form a bed for livestock, said means being connected to the inside of said container, closure means for closing the upper portion of said container being associated therewith.

Further characteristics and advantages of the invention will become apparent from the detailed description of an embodiment thereof which is illustrated only by way of non-limitative example in the accompanying drawings, wherein:

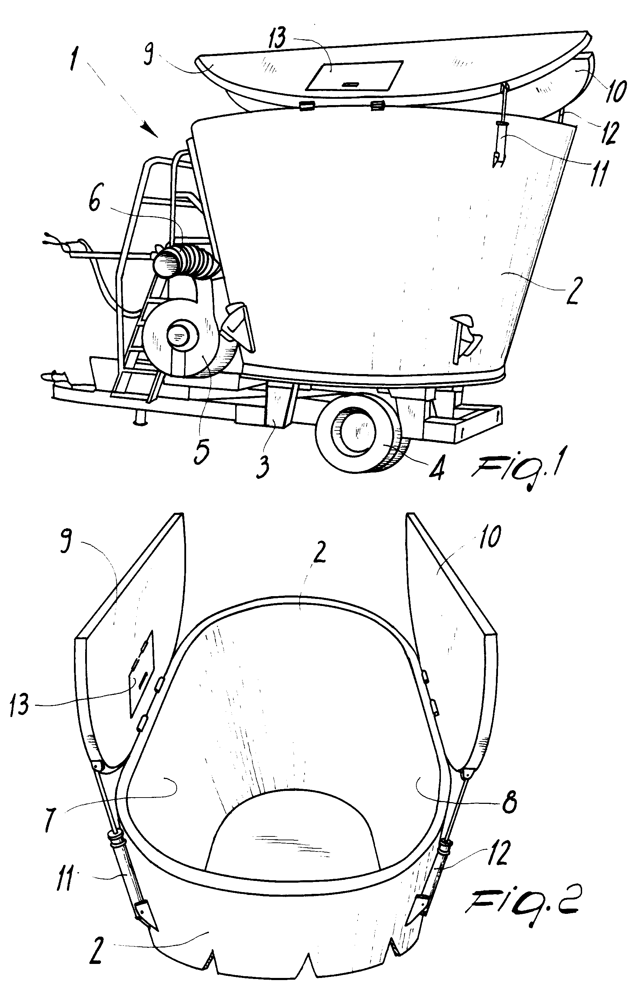

Fig. 1 is an isometric view of a truck according to the invention;
Fig. 2 is a top isometric partial view of the truck of Fig. 1;
Figs. 3 and 4 are schematic top views respectively of two different embodiments of the closure means of the container of the truck according to the invention;
Fig. 5 is a schematic partial cross-section view, according to the line V-V of Fig. 3, of the closure means.

With reference to the above figures, a truck for mixing fibrous products is generally indicated by the reference numeral 1 and is constituted by a container 2 which substantially has the shape of an inverted truncated cone and is appropriately fixed to a chassis 3 with wheels 4.

As can be seen in the figures, the upper profile of the container 2 is substantially oval, with two parallel rectilinear portions which are arranged at the two longitudinal sides of the chassis 3.

Said container 2 has, inside it, a vertical screw or scroll, which is not visible in the figures and is welded to a rotating shaft; said scroll has a helical profile which is arranged according an imaginary conical surface.

Said shaft is connected to a mechanical transmission which associates it with actuation elements which are kinematically connected for example to the power take-off of a towing tractor.

According to the invention, a blower 5 is fixed to said truck 1 in an appropriate position, and its intake duct is advantageously connected to the inside of the container 2, whereas the discharge duct extends with a variable-height orientatable tube 6.

Said blower 5 is adapted to gather straw and/or hay which have been previously loaded, shredded and mixed in the container 2 and for ejecting it from the tube 6, the orientation whereof is conveniently controlled manually, so as to form a bed for the livestock.

Still according to the invention, two covering half-elements 9 and 10 which join at the longitudinal axis of the container 2 are hinged on the rectilinear lateral portions of the upper edge of the container 2, which are respectively indicated by 7 and 8.

Said two half-elements 9 and 10 are conveniently actuated by respective hydraulic pistons 11 and 12 which are arranged substantially vertically and act at the curved regions of the container 2 so as to provide a convenient lever arm for lifting.

As illustrated, a trapdoor 13 is provided on the half-element 9 for inspections during the operation of the machine.

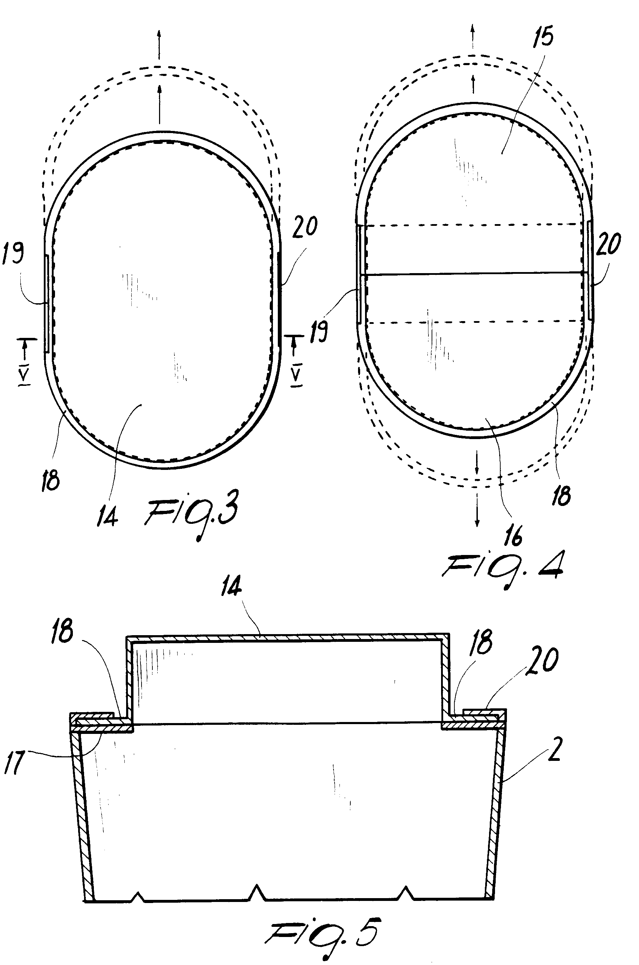

The two half-elements 9 and 10 can be replaced, with the same purpose of closing the container 2, with a single cover 14 or with two half-covers 15 and 16, as respectively shown in Figs. 3 and 4, which join along a transverse axis and are slidably associated with the upper edge on which an annular resting lamina 17 is conveniently welded.

The cover 14 or the half-covers 15 and 16 conveniently have a laminar perimetric edge 18 which is interposed, in the rectilinear regions of the edge of the container 2, between the annular lamina 17 and sliding guides or rails 19 and 20 which are welded thereon.

Each type of covering element can naturally be made both of a metal sheet or net.

From what has been described above, the intended aim and objects of the present invention are therefore achieved, an improved truck having been provided which, though it preserves the same functionality as known types, eliminates the current possibility of overflow of material during processing.

The truck according to the invention, besides being suitable for distributing fodder to livestock, is also suitable for inserting therein exclusively straw and/or hay so as to effortlessly provide the bed for livestock.

In practice, the materials employed, as well as the dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each a element identified by way of example by such reference signs.

## Claims

1. Truck for mixing fibrous products, comprising a chassis (3) on which a mixing container (2) is mounted, said container substantially having the shape of an inverted truncated cone and being internally provided with at least one vertical scroll which is welded to a rotating shaft which is coupled thereto, characterized in that it comprises means (5) adapted to blow shredded hay or straw to form a bed for livestock, said means being connected to the inside of said container (2), closure means (9,10,14,15,16) for closing the upper portion of said container being associated therewith.

2. Truck according to claim 1, characterized in that said means, adapted to form a bed for livestock, is constituted by a blower (5) which is applied in an appropriate position of the truck and is associated, with its intake duct, with the inside of said container (2), the delivery duct ending with an orientatable variable-height tube which is suitable for ejecting said shredded straw or hay and is controlled manually.

3. Truck according to claim 1, characterized in that said means for closing its upper portion comprises two covering half-elements (9,10) which are pivoted on the upper edge of said container (2), said covering half-elements being actuated by respective hydraulic pistons (11,12) which are rigidly coupled to the walls of said container in such a region as to form an adequate lever arm with the respective pivoting points.

4. Truck according to claim 1, characterized in that said closure means, which can be applied on containers which have an oval upper edge with two rectilinear parallel portions, comprises a cover (14) which rests on an annular lamina (17) which is welded to said edge, said cover having a laminar perimetric edge (18) which rests on said lamina and is interposed, in the rectilinear regions, between said lamina and sliding rails (19,20) which are welded thereon.

5. Truck according to claim 4, characterized in that said closure means comprises two half-covers (15,16) which join along an axis which is transverse to said container.

6. Truck according to one or more of the preceding claims, characterized in that a trapdoor (13) for inspecting the container during processing can be located on said closure means.

## Patentansprüche

1. Wagen zum Mischen faserförmiger Produkte, mit einem Fahrgestell (3), auf dem ein Mischbehälter (2) montiert ist, wobei der Behälter im wesentlichen die Form eines umgekehrten Kegelstumpfes aufweist und in dessen Inneren wenigstens eine vertikale Schnecke angeordnet ist, die an eine hieran gekoppelte rotierende Welle geschweißt ist, **gekennzeichnet durch** eine Einrichtung (5), die angepaßt ist, zerschnittenes Heu oder Stroh zu verblasen, um eine Lagerstätte für Vieh zu bilden, wobei die Einrichtung (5) mit dem Inneren des Behälters (2) verbunden ist, und Verschlußmittel (9,10,14,15,16) zum Verschließen des oberen Abschnitts des Behälters, die diesem zugeordnet sind.

2. Wagen nach Anspruch 1, **dadurch gekennzeichnet, daß** die zum Bilden einer Lagerstätte für Vieh angepaßte Einrichtung durch ein Gebläse (5) gebildet ist, das an einer geeigneten Stelle des Wagens vorgesehen ist und mit seinem Einlaßkanal dem Inneren des Behälters (2) zugeordnet ist, und der Ausbringkanal in einem ausrichtbaren höhenveränderbaren Rohr endet, das geeignet ist, das zerschnittene Stroh oder Heu auszuwerfen und manuell steuerbar ist.

3. Wagen nach Anspruch 1, **dadurch gekennzeichnet, daß** die Mittel zum Verschließen seines oberen Abschnitts zwei Abdeck-Halbteile (9,10) umfassen, die schwenkbar am oberen Rand des Behälters (2) angeordnet sind, wobei die Abdeck-Halbteile durch entsprechende Hydraulikkolben (11,12) betätigt werden, die starr mit den Wänden des Behälters in einem solchen Bereich gekoppelt sind, daß ein geeigneter Hebelarm mit den entsprechenden Drehpunkten gebildet wird.

4. Wagen nach Anspruch 1, **dadurch gekennzeichnet, daß** die Verschlußmittel, die an Behältern mit einem ovalen oberen Rand mit zwei geradlinigen parallelen Abschnitten angebracht sein können, einen Deckel (14) umfassen, der auf einer ringförmigen Platte (17) ruht, die an dem Rand angeschweißt ist, wobei der Deckel einen plattenförmigen Umfangsrand (18) aufweist, der auf der Platte ruht und in den geradlinigen Abschnitten zwischen der Platte und daran angeschweißten Gleitschienen (19,20) zwischengeordnet ist.

5. Wagen nach Anspruch 4, **dadurch gekennzeichnet, daß** die Verschlußmittel zwei Halbdeckel (15,16) umfassen, die an einer quer zum Behälter verlaufenden Achse zusammenstoßen.

6. Wagen nach einem oder mehreren der vorstehenden Ansprüche, **dadurch gekennzeichnet, daß** eine Klapptür (13) zum Inspizieren des Behälters während der Bearbeitung an den Verschlußmitteln angeordnet sein kann.

## Revendications

1. Remorque utilisée pour le mélange de matières fibreuses et qui comprend un châssis (3) sur lequel une cuve de mélange (2) est montée, cette cuve ayant la forme générale d'un tronc de cône et comportant à l'intérieur au moins une hélice sans fin verticale soudée à un arbre rotatif accouplé à la cuve, caractérisée par le fait qu'elle comporte des moyens (5) étudiés pour refouler en soufflant du foin haché ou de la paille hachée pour former de la litière pour le bétail, ces moyens étant raccordés à la partie intérieure de la cuve (2), et par le fait qu'elle comporte des moyens de fermeture (9, 10, 14, 15, 16) attachés à la partie supérieure de la cuve pour la fermer.

2. Remorque selon la revendication 1, caractérisée par le fait que ces moyens qui ont été étudiés pour former de la litière pour le bétail sont constitués par un ventilateur (5) installé dans un emplacement approprié de la remorque et qui est relié à la partie intérieur de la cuve (2) par l'intermédiaire de son conduit d'entrée ou d'aspiration, son conduit de refoulement se terminant à son extrémité extérieure par un tube orientable et de hauteur variable et qui convient à l'éjection de la paille hachée ou du foin haché et dont la commande se fait à la main.

3. Remorque selon la revendication 1, caractérisée par le fait que les moyens de fermeture de la partie supérieure de la cuve comportent deux demi-éléments de fermeture (9, 10) qui pivotent autour du bord supérieur de la cuve (2), ces deux demi-éléments de fermeture étant actionnés par des vérins hydrauliques (11, 12) respectivement qui sont ancrés de manière rigide aux parois de la cuve dans une région qui convient de manière adéquate à la manoeuvre d'un bras de levier autour de points de pivotement respectifs.

4. Remorque selon la revendication 1, caractérisée par le fait que les moyens de fermeture qui sont appliqués à la cuve dont le bord supérieur est de forme ovale et comporte deux parties rectilignes comprennent un couvercle (14) qui repose sur un rebord annulaire (17) soudé au bord de la cuve, ce couvercle comportant aussi un bord périphérique annulaire (18) reposant sur le rebord annulaire (17) et occupe une position interposée, dans les régions rectilignes, entre le rebord annulaire (17) et des glissières en forme de rail (19, 20) soudées au rebord annulaire (17).

5. Remorque selon la revendication 4, caractérisée par le fait que ces moyens de fermeture comprennent des demi-couvercles (15, 16) qui se rejoignent le long d'un axe occupant une position transversale par rapport à la cuve.

6. Remorque selon une ou plusieurs des revendications qui précèdent, caractérisée par le fait qu'une trappe d'inspection (13) pour inspecter l'intérieur de la cuve pendant le traitement peut être logée sur les moyens de fermeture.
